(19) Europäisches Patentamt
European Patent Office
Office européen des brevets

(11) Veröffentlichungsnummer : **0 113 643**
**B1**

(12) # EUROPÄISCHE PATENTSCHRIFT

(45) Veröffentlichungstag der Patentschrift : **04.03.87**

(51) Int. Cl.⁴ : **C 09 B 45/30**// D06P1/10

(21) Anmeldenummer : **83810630.0**

(22) Anmeldetag : **30.12.83**

(54) **1:2-Kobaltkomplexe von Disazofarbstoffen.**

(30) Priorität : **05.01.83 CH 46/83**

(43) Veröffentlichungstag der Anmeldung : **18.07.84 Patentblatt 84/29**

(45) Bekanntmachung des Hinweises auf die Patenterteilung : **04.03.87 Patentblatt 87/10**

(84) Benannte Vertragsstaaten : **CH DE FR GB IT LI**

(56) Entgegenhaltungen :
**EP-A- 0 022 485**
**EP-A- 0 045 868**
**EP-A- 0 073 950**
**US-A- 2 117 707**
**US-A- 2 200 445**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Püntener, Alois, Dr.**
**Pulverweg 13**
**CH-4310 Rheinfelden (CH)**

**EP 0 113 643 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind 1 : 2-Kobalt-Komplexfarbstoffe der allgemeinen Formel I

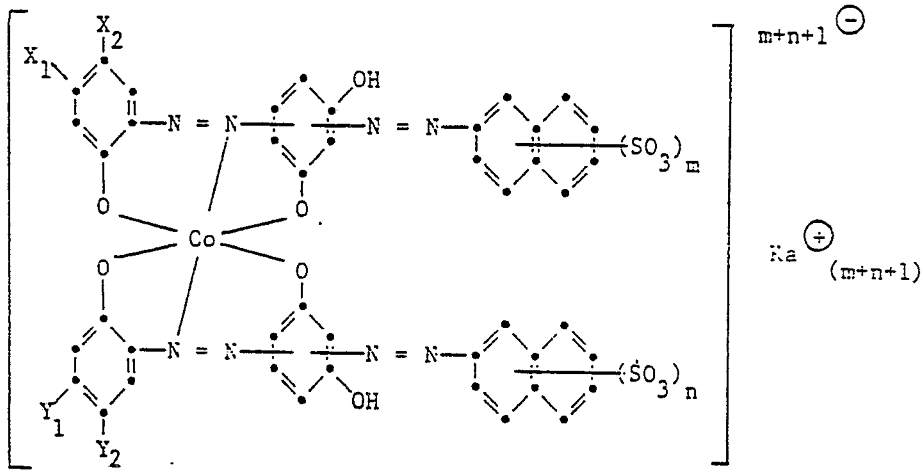

(I)

worin

$X_1$ Nitro oder Wasserstoff, $X_2$ Nitro, Wasserstoff, Chlor oder Methyl,
$Y_1$ Nitro oder Wasserstoff, $Y_2$ Nitro, Wasserstoff, Chlor oder Methyl,
m und n jeweils unabhängig voneinander 1, 2 oder 3 und $Ka^{\oplus}$ ein Kation

bedeutet, wobei jeweils einer der Substituenten $X_1$ oder $X_2$ und $Y_1$ oder $Y_2$ Nitro ist und der andere eine der angegebenen Bedeutungen ausser Nitro aufweist.

Die phenolische Diazokomponente der Disazofarbstoffe leitet sich von 1-Hydroxy-2-amino-4-chlor-5-nitrobenzol, 1-Hydroxy-2-amino-4-methyl-5-nitrobenzol, insbesondere aber von 1-Hydroxy-2-amino-4-nitrobenzol oder von 1-Hydroxy-2-amino-5-nitrobenzol ab.

Als zweite Diazokomponente enthalten die Disazofarbstoffe eine 2-Naphthylaminsulfosäure mit 1 bis 3 Sulfogruppen, wie z. B. 2-Naphthylamin-1-, -5-, -6-, -7- oder -8-sulfosäure, 2-Naphthylamin-3,6-, -4,8-, -5,7- oder -6,8-disulfosäure oder 2-Naphthylamin-4,6,8-trisulfosäure. Bevorzugt sind die Monosulfosäuren und unter diesen insbesondere 2-Naphthylamin-6-sulfosäure.

$Ka^{\oplus}$ stellt ein Kation, beispielsweise ein Alkalikation, wie Lithium, Kalium oder vorzugsweise Natrium, dar. Ferner kann $Ka^{\oplus}$ ein Ammoniumkation oder das Ammoniumsalz eines organischen Amins sein.

Die in den 1 : 2-Kobaltkomplexen der angegebenen Formel enthaltenen beiden Disazofarbstoffe können verschieden oder vorzugsweise gleich sein.

Von besonderer Bedeutung wegen ihrer guten färberischen Eigenschaften sind die Verbindungen der Formel II

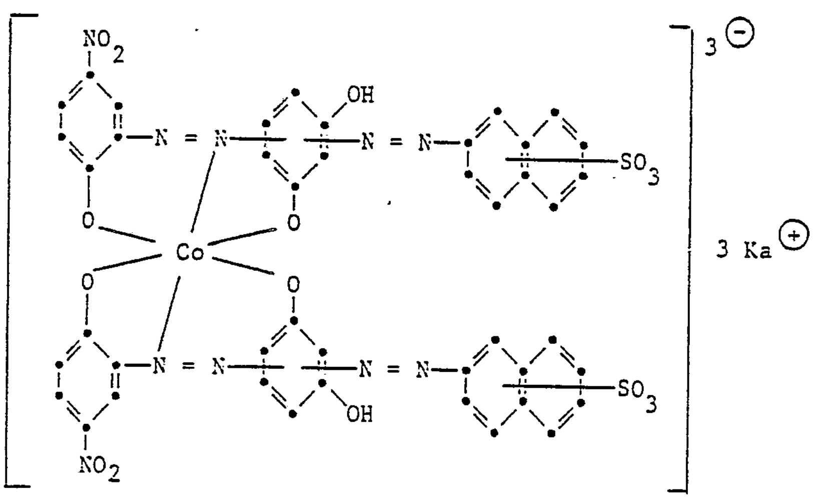

(II)

worin $Ka^{\oplus}$ ein Kation bedeutet.

Unter diesen ist diejenige besonders bevorzugt, welche die beiden Sulfogruppen jeweils in 6-Stellung

des 2-Naphthylaminrestes trägt.

Die erfindungsgemässen Farbstoffe der Formel I können nach an sich bekannten Methoden hergestellt werden, beispielsweise indem man einen Farbstoff der Formel III

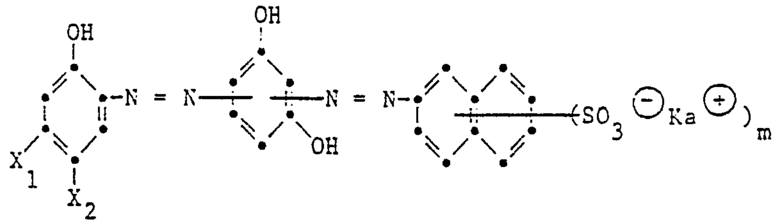

(III)

worin $X_1$ Nitro oder Wasserstoff, $X_2$ Nitro, Wasserstoff, Chlor oder Methyl, wobei jeweils einer der Substituenten $X_1$ oder $X_2$ Nitro ist und der andere eine der angegebenen Bedeutungen ausser Nitro aufweist, $Ka^{\oplus}$ ein Kation und m 1, 2 oder 3 bedeutet, und einen Farbstoff der Formel IV

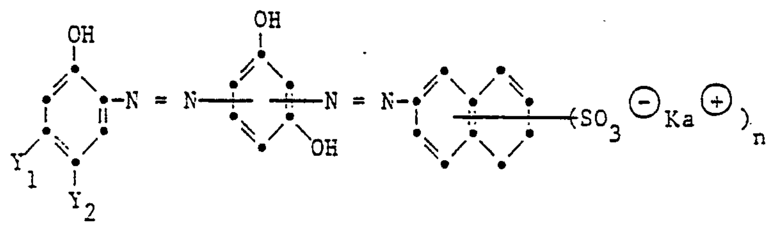

(IV)

worin $Y_1$ Nitro oder Wasserstoff, $Y_2$ Nitro, Wasserstoff, Chlor oder Methyl, wobei jeweils einer der Substituenten $Y_1$ oder $Y_2$ Nitro ist und der andere eine der angegebenen Bedeutungen ausser Nitro aufweist, $Ka^{\oplus}$ ein Kation und n 1, 2 oder 3 bedeutet, mit einem kobaltabgebenden Mittel zum 1 : 2-Kobaltkomplex umsetzt, wobei die Farbstoffe der Formeln III und IV identisch sein können.

Die Farbstoffe der Formeln III und IV sind bekannt oder können nach bekannten Methoden hergestellt werden durch Kuppeln eines diazotierten Aminophenols und einer diazotierten Aminonaphthalinsulfosäure mit Resorcin, wobei die Reihenfolge der Kupplung beliebig sein kann.

Die Herstellung der erfindungsgemässen Farbstoffe der Formel I kann auch erfolgen, indem man zunächst einen Farbstoff der Formel V

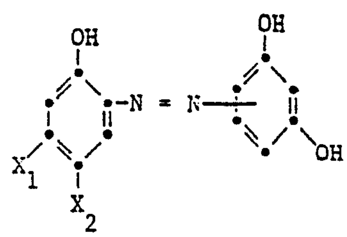

(V)

wobei $X_1$ und $X_2$ die oben angegebene Bedeutung aufweisen, und einen Farbstoff der Formel VI

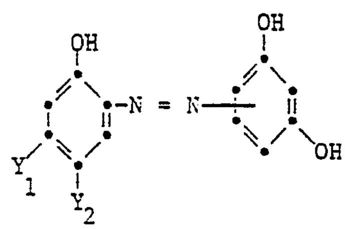

(VI)

worin $Y_1$ und $Y_2$ die oben angegebene Bedeutung aufweisen und wobei die Farbstoffe der Formeln V und VI identisch sein können, in den 1 : 2-Kobaltkomplex überführt und auf diesen dann ein diazotiertes Sulfonaphthylamin der Formel VII

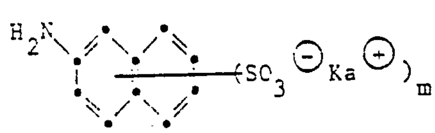

(VII)

worin Ka$^{\oplus}$ und m die oben angegebene Bedeutung aufweisen, kuppelt.

Man kann auch Gemische von zwei oder mehreren Sulfonaphthylaminen einsetzen.

Das bevorzugte Verfahren zur Herstellung der erfindungsgemässen 1 : 2-Kobaltkomplexe der Formel I besteht jedoch darin, dass man zunächst Resorcin mit einem Sulfonaphthylamin der Formel VII und danach mit einem Nitroaminophenol der Formel VIII

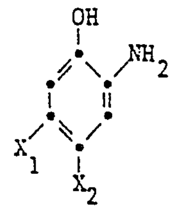

(VIII)

kuppelt und anschliessend den erhaltenen Disazofarbstoff in den 1 : 2-Kobaltkomplex überführt.

Vorzugsweise setzt man dabei 1 bis 1,2 Mol Sulfonaphthylamin und 1 bis 0,8 Mol Nitroaminophenol pro Mol Resorcin ein.

Die nach den obigen Verfahren erhältlichen neuen Metallkomplexfarbstoffe der Formel I werden in Form ihrer Salze, insbesondere Alkali-, vor allem Natrium- oder Lithiumsalze, oder auch Ammoniumsalze oder Salze von organischen Aminen mit positiv geladenem Stickatoffatom isoliert und eignen sich zum Färben und Bedrucken verschiedener Stoffe, gegebenenfalls in Gegenwart eines Egalisierhilfsmittels, vor allem aber zum Färben und Bedrucken stickstoffhaltiger Materialien, wie Seide oder Polyurethanen, vorzugsweise jedoch zum Färben von Wolle, Polyamid und insbesondere von Pelzen oder Leder, wobei alle Ledersorten geeignet sind, z. B. Chromleder, nachgegerbtes Leder oder Velourleder von Ziege, Rind und Schwein.

Man erhält braune Färbungen mit guten Echtheiten, insbesondere Licht- und Nassechtheiten.

Das nachfolgende Beispiel dient der Erläuterung der Erfindung, ohne sie darauf zu beschränken. Teile bedeuten Gewichtsteile und Prozente Gewichtsprozente. Die Temperaturen sind in Grad Celsius angegeben.

## Beispiel 1

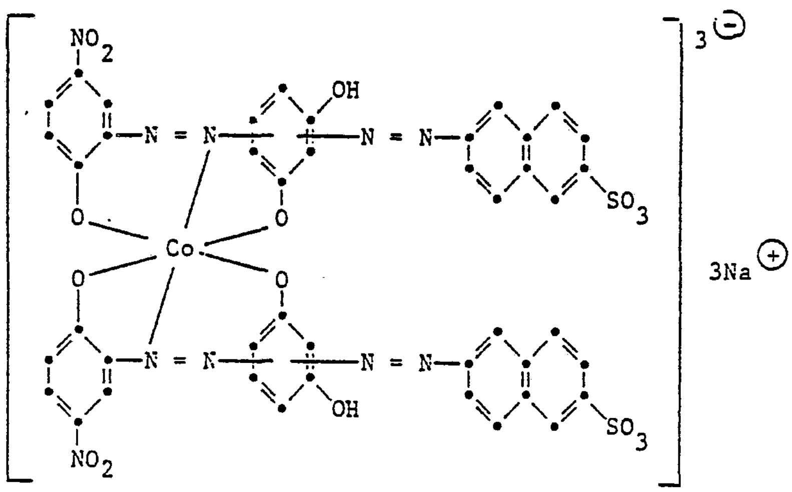

In 100 Teile Wasser werden 11 Teile Resorcin eingetragen und mit 26,8 Teilen 2-Naphthylamin-6-sulfonsäure, die nach bekannter Methode mit Säure und Nitrit diazotiert worden ist, versetzt. Durch Zugabe von 2-molarer Natronlauge wird der pH Wert leicht sauer gestellt. Nach Beendigung der ersten Kupplung werden die ebenfalls nach bekannter Methode diazotierten 15,4 Teile 2-Amino-4-nitrophenol zugegeben. Dabei wird mit 2-molarer Natronlauge der pH-Wert leicht alkalisch gehalten. Nach Beendigung der zweiten Kupplung erhält man ein Farbstoffgemisch, dessen Hautkomponente dem in der obigen Formel aufgeführten Disazofarbstoff entspricht.

Der erhaltene Farbstoff wird mit 50 ml einer 1-molaren Kobaltsulfatlösung 6 Stunden bei 80° und mit 2-molarer Natronlauge neutral bis schwach alkalisch gehaltenem pH-Wert metallisiert. Anschliessend wird mit 200 Teilen einer 1 : 1-Mischung aus Kaliumchlorid und Natriumchlorid ausgesalzen, filtriert und getrocknet. Das erhaltene dunkle Pulver färbt Leder in einem rotbraunen Farbton mit guten Echtheiten.

Gegenüber dem analogen Chrom- und Eisenkomplex zeichnet sich der vorstehend beschriebene Kobaltkomplex dadurch aus, dass die Färbungen auf Leder bessere Lichechtheit aufweisen.

Beispiel 2

Arbeitet man wie im Beispiel 1 beschrieben, verwendet jedoch anstelle von 2-Amino-4-nitrophenol die gleiche Menge 2-Amino-5-nitrophenol, so erhält man einen Farbstoff, der Leder in weniger rotstichigem Braun mit guten Echtheiten färbt.

Beispiel 3

Arbeitet man wie im Beispiel 1 beschrieben, verwendet jedoch anstelle von 2-Amino-4-nitrophenol die gleiche Menge eines Gemisches aus gleichen Teilen 2-Amino-4-nitrophenol und 2-Amino-5-nitrophenol, so erhält man einen Farbstoff, der Leder in weniger rotstichigem Braun mit guten Echtheiten färbt.

Arbeitet man wie im Beispiel 1 beschrieben, verwendet jedoch äquivalente Mengen der in Spalte 2 der folgenden Tabelle aufgeführten Aminophenole sowie der in Spalte 3 verzeichneten Naphthylaminsulfonsäuren, so erhält man Farbstoffe, welche Leder in der in Spalte 4 angegebenen Nuance färben.

Tabelle

| Nr. | Aminophenol | 2-Naphthylaminsulfonsäure | Nuance auf Leder |
|---|---|---|---|
| 1 | 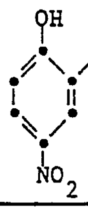 | 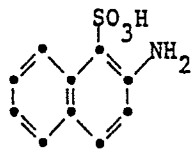 | rotbraun |
| 2 | 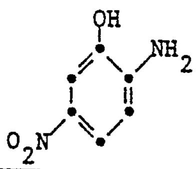 | do | braun |
| 3 | do | 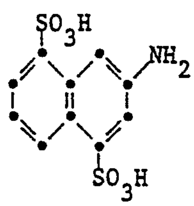 | braun |
| 4 | 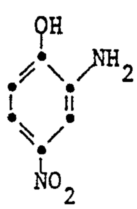 | 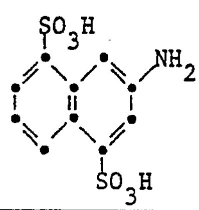 | rotbraun |
| 5 | do | 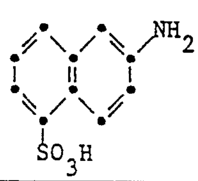 | rotbraun |
| 6 | do | 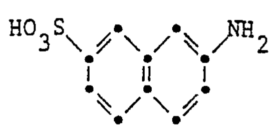 | orange-braun |

Tabelle (Fortsetzung)

| Nr. | Aminophenol | 2-Naphthylaminsulfonsäure | Nuance auf Leder |
|---|---|---|---|
| 7 | do | 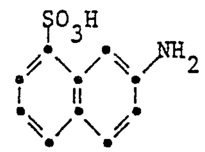 | rotbraun |
| 8 | do | 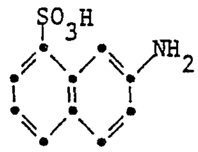 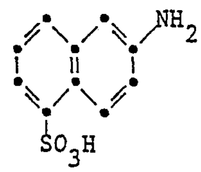 1:1 Mischung | rotbraun |
| 9 | 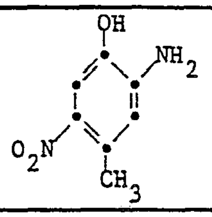 | 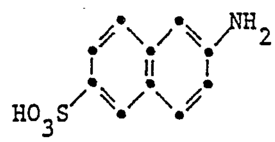 | braun |
| 10 | 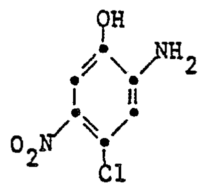 | 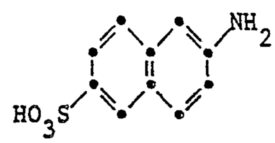 | braun |

Färbevorschrift für Leder

100 Teile Bekleidungsvelourleder werden bei 50° in einer Lösung von 1 000 Teilen Wasser und 2 Teilen 24 %igem Ammoniak während 2 Stunden aufgewalkt und anschliessend bei 60° in einer Lösung von 1 000 Teilen Wasser, 2 Teilen 24 %igem Ammoniak und 3 Teilen Farbstoff des Beispiels 1 während 1 Stunde gefärbt. Hierauf gibt man ein Lösung von 40 Teilen Wasser und 4 Teilen 85 %iger Ameisensäure zu und färbt noch weitere 30 Minuten. Dann werden die Leder gut gespült und gegebenenfalls noch mit 2 Teilen eines Dicyandiaminoformaldehydkondensationsproduktes während 30 Minuten bei 50° behandelt. Man erhält eine rotbraune Färbung mit guten Echtheiten.

**Patentansprüche**

1. 1 : 2-Kobalt-Komplexfarbstoffe der allgemeinen Formel I

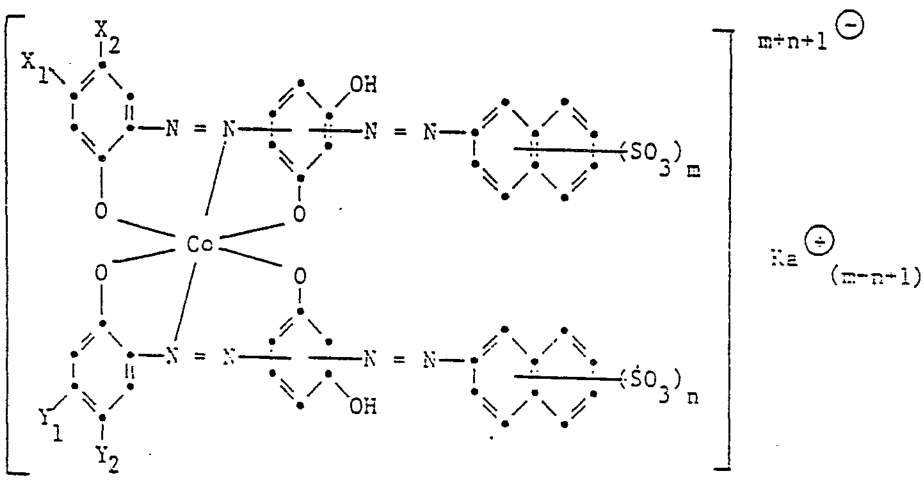

(I)

worin $X_1$ Nitro oder Wasserstoff, $X_2$ Nitro, Wasserstoff, Chlor oder Methyl, $Y_1$ Nitro oder Wasserstoff, $Y_2$ Nitro, Wasserstoff, Chlor oder Methyl, m und n jeweils unabhängig voneinander 1, 2 oder 3 und $Ka^{\oplus}$ ein Kation bedeutet, wobei jeweils einer der Substituenten $X_1$ oder $X_2$ und $Y_1$ oder $Y_2$ Nitro ist und der andere eine der angegebenen Bedeutungen ausser Nitro aufweist.

2. Farbstoffe gemäss Anspruch 1, worin $X_2$ und $Y_2$ unabhängig voneinander jeweils Nitro oder Wasserstoff bedeuten.

3. Farbstoffe gemäss einem der Ansprüche 1 oder 2, worin m und n jeweils 1 bedeuten.

4. Farbstoffe gemäss Anspruch 3, worin die Sulfogruppen jeweils in 6-Stellung des 2-Naphthylaminrestes gebunden sind.

5. Farbstoffe gemäss Anspruch 1 der Formel II

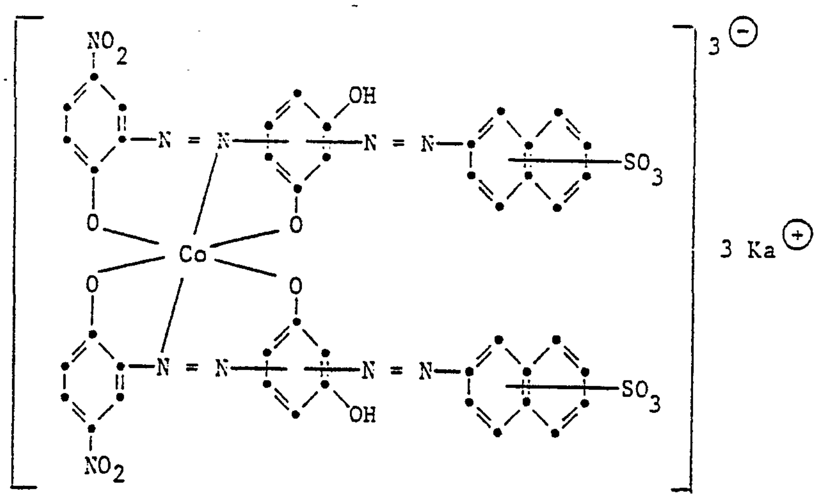

(II)

worin $Ka^{\oplus}$ ein Kation bedeutet.

6. Farbstoffe gemäss Anspruch 5, worin die Sulfogruppen jeweils in 6-Stellung des 2-Naphthylaminrestes gebunden sind.

7. Verfahren zur Herstellung von Farbstoffen der Formel I, dadurch gekennzeichnet, dass man einen Farbstoff der Formel III

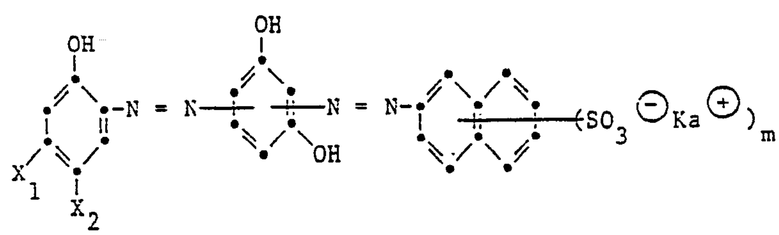

(III)

worin $X_1$ Nitro oder Wasserstoff, $X_2$ Nitro, Wasserstoff, Chlor oder Methyl, wobei jeweils einer der Substituenten $X_1$ oder $X_2$ Nitro ist und der andere eine der angegebenen Bedeutungen ausser Nitro aufweist, $Ka^{\oplus}$ ein Kation und m 1, 2 oder 3 bedeutet, und einen Farbstoff der Formel IV

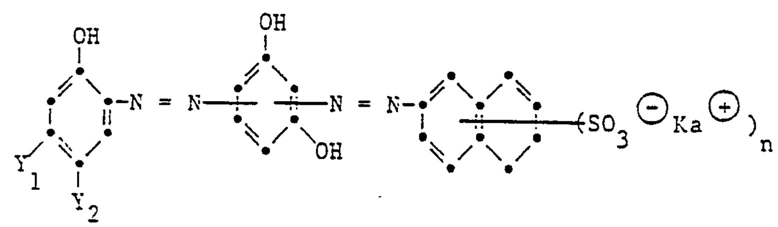

(IV)

worin $Y_1$ Nitro oder Wasserstoff, $Y_2$ Nitro, Wasserstoff, Chlor oder Methyl, wobei jeweils einer der Substituenten $Y_1$ oder $Y_2$ Nitro ist und der andere eine der angegebenen Bedeutungen ausser Nitro aufweist, $Ka^{\oplus}$ ein Kation und n, 1, 2 oder 3 bedeutet, mit einem kobaltabgebenden Mittel zum 1 : 2-Kobaltkomplex umsetzt, wobei die Farbstoffe der Formel III und IV identisch sein können.

8. Verfahren zur Herstellung von Farbstoffen der Formel I, dadurch gekennzeichnet, dass man zunächst Resorcin mit einem Sulfonaphthylamin der Formel VII

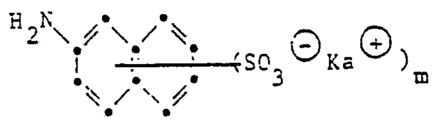

(VII)

und danach mit einem Nitroaminophenol der Formel VIII

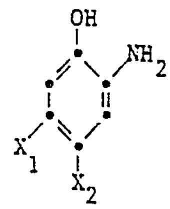

(VIII)

kuppelt und anschliessend den erhaltenen Disazofarbstoff in den 1 : 2-Kobaltkomplex überführt.

9. Verfahren gemäss Anspruch 8, dadurch gekennzeichnet, dass man 1 bis 1,2 Mol Sulfonaphthylamin und 1 bis 0,8 Mol Nitroaminophenol pro Mol Resorcin einsetzt.

10. Farbstoffe, erhältlich gemäss einem der Ansprüche 7 bis 9.

11. Verwendung der Farbstoffe der Formel I zum Färben von Wolle oder Polyamid und insbesondere von Leder oder Pelzen.

## Claims

1. A 1 : 2 cobalt complex dye of the general formula I

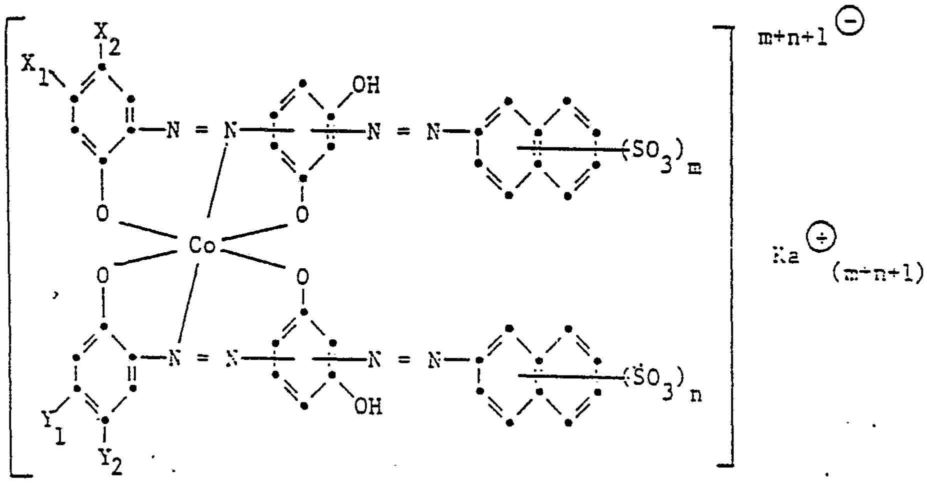

(I)

in which $X_1$ is nitro or hydrogen, $X_2$ is nitro, hydrogen, chlorine or methyl, $Y_1$ is nitro or hydrogen, $Y_2$ is nitro, hydrogen, chlorine or methyl, m and n are each independently of the other 1, 2 or 3, and $Ka^{\oplus}$ is a cation, and one of each pair of substituents $X_1$ or $X_2$ and $Y_1$ or $Y_2$ is nitro and the other is as defined but not nitro.

2. A dye according to claim 1, in which $X_2$ and $Y_2$ are each independently of the other nitro or hydrogen.

3. A dye according to either of claims 1 or 2, in which m and n are each 1.

4. A dye according to claim 3, in which the sulfo groups are each bonded in the 6-position of the 2-naphthylamine radical.

5. A dye according to claim 1 of the formula II

(See formula page 9)

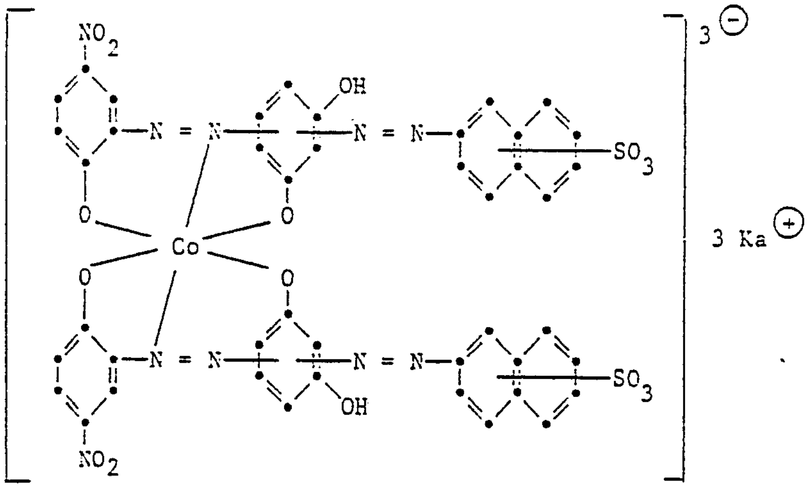

(II)

in which Ka$^{\oplus}$ is a cation.

6. A dye according to claim 5, in which the sulfo groups are each bonded in the 6-position of the 2-naphthylamine radical.

7. A process for preparing a dye of the formula I, which comprises reacting a dye of the formula III

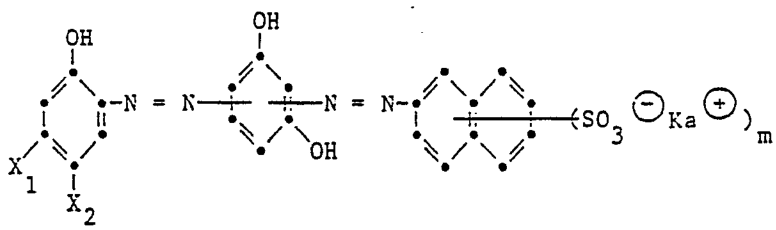

(III)

in which $X_1$ is nitro or hydrogen, $X_2$ is nitro, hydrogen, chlorine or methyl, one of the substituents $X_1$ or $X_2$ being nitro and the other being as defined but not nitro, Ka$^{\oplus}$ is a cation and m is 1, 2 or 3, and a dye of the formula IV

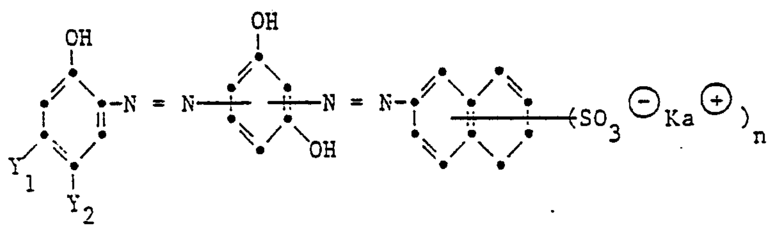

(IV)

in which $Y_1$ is nitro or hydrogen, $Y_2$ is nitro, hydrogen, chlorine or methyl, one of the substituents $Y_1$ or $Y_2$ being nitro and the other being as defined but not nitro, Ka$^{\oplus}$ is a cation and n is 1, 2 or 3, with a cobalt-donating agent to give a 1 : 2 cobalt complex in which the dyes of the formula III and IV can be identical.

8. A process for preparing a dye of the formula I, which comprises coupling resorcinol first with a sulfonaphthylamine of the formula VII

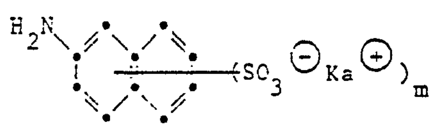

(VII)

and then with a nitrophenol of the formula VIII

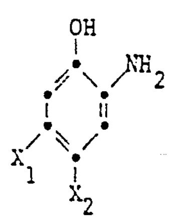

(VIII)

and thereafter converting the resultant disazo dye into a 1 : 2 cobalt complex.

9. A process according to claim 8, wherein 1 to 1.2 moles of sulfonaphthylamine and 1 to 0.8 mole of nitroaminophenol are used per mole of resorcinol.

10. A dye which can be obtained according to any one of claims 7 to 9.

11. Use of a dye of the formula I, for dyeing wool or polyamide and in particular leather or fur.

**Revendications**

1. Colorants à complexe de cobalt 1 : 2, de formule générale I

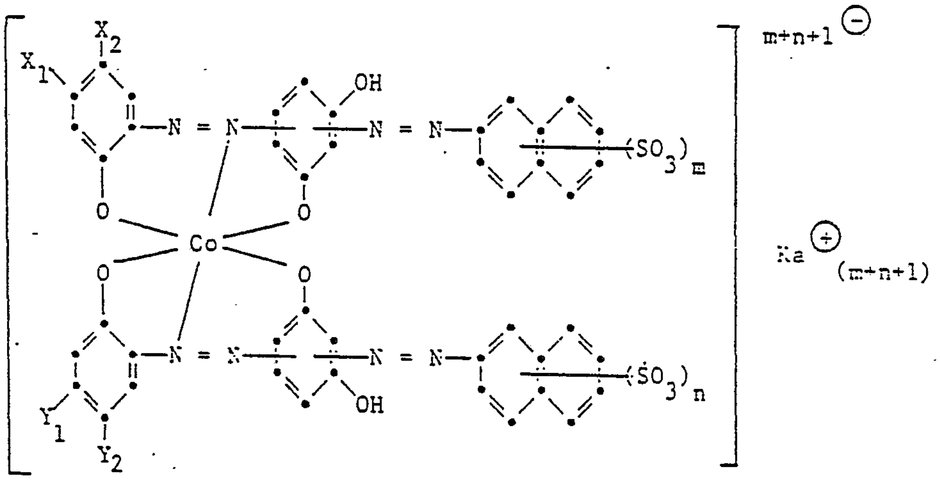

(I)

dans laquelle $X_1$ représente le groupe nitro ou un atome d'hydrogène ; $X_2$ représente un atome d'hydrogène ou de chlore ou un groupe nitro ou méthyle ; $Y_1$ représente le groupe nitro ou un atome d'hydrogène ; $Y_2$ représente un atome d'hydrogène ou de chlore ou un groupe nitro ou méthyle ; m et n sont chacun, indépendamment l'un de l'autre, 1, 2 ou 3 ; et $Ka^{\oplus}$ représente un cation ; un des substituants $X_1$ ou $X_2$ et, respectivement, $Y_1$ ou $Y_2$, étant un groupe nitro, et l'autre ayant une des significations données, à l'exception du groupe nitro.

2. Colorants selon la revendication 1, dans lesquels $X_2$ et $Y_2$ représentent chacun, indépendamment l'un de l'autre, un groupe nitro ou un atome d'hydrogène.

3. Colorants selon l'une des revendications 1 ou 2, dans lesquels m et n représentent chacun 1.

4. Colorants selon la revendication 3, dans lesquels les groupes sulfo sont chacun fixés en position 6 du reste 2-naphtylamino respectif.

5. Colorants selon la revendication 1, de formule II

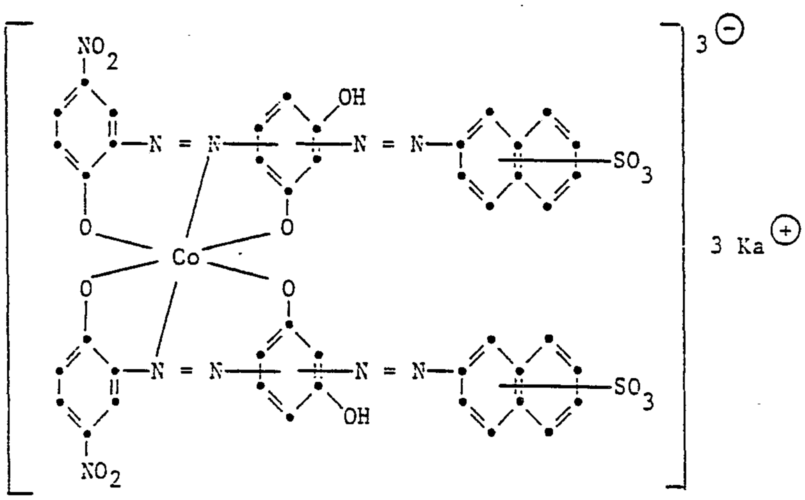

(II)

dans laquelle $Ka^{\oplus}$ représente un cation.

6. Colorants selon la revendication 5, dans lesquels les groupes sulfo sont fixés chacun en position 6 du reste 2-naphtylamino respectif.

7. Procédé pour la préparation des colorants de formule I, caractérisé par le fait que l'on fait réagir un colorant de formule III

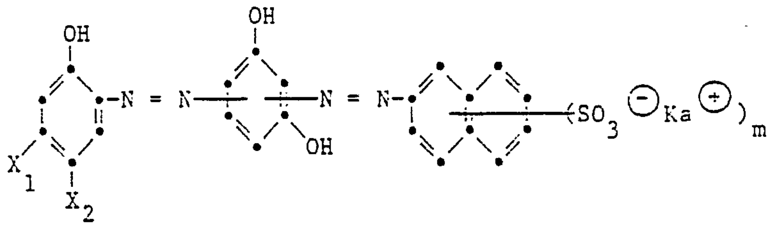

(III)

dans laquelle $X_1$ est le groupe nitro ou un atome d'hydrogène, $X_2$ est un atome d'hydrogène ou de chlore ou un groupe nitro ou méthyle, un des substituants $X_1$ ou $X_2$ étant dans chaque cas le groupe nitro et l'autre ayant une des significations données, à l'exception du groupe nitro, $Ka^{\oplus}$ représente un cation, et m est 1, 2 ou 3, et un colorant de formule IV

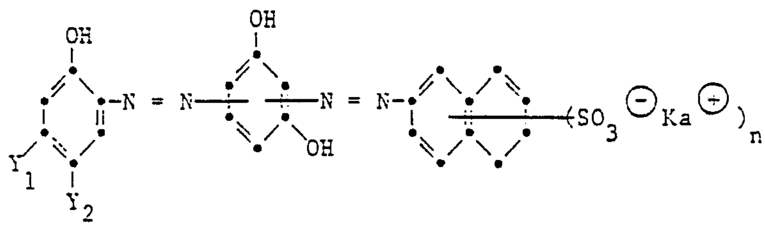

(IV)

dans laquelle $Y_1$ est le groupe nitro ou un atome d'hydrogène, $Y_2$ est un atome d'hydrogène ou de chlore ou un groupe nitro ou méthyle, un des substituants $Y_1$ ou $Y_2$ étant dans chaque cas le groupe nitro et l'autre ayant une des significations données, à l'exception du groupe nitro, $Ka^{\oplus}$ représente un cation, et n est 1, 2 ou 3, avec un agent donneur de cobalt, pour aboutir au complexe de cobalt 1 : 2, les colorants de formules III et IV pouvant être identiques.

8. Procédé pour la préparation des colorants de formule I, caractérisé par le fait que l'on fait d'abord copuler le résorcinol avec une sulfonaphtylamine de formule VII

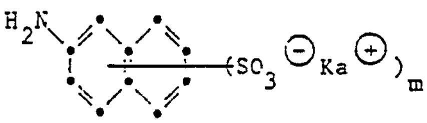

(VII)

puis avec un nitroaminophénol de formule VIII

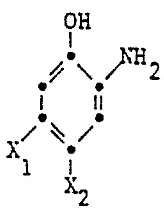

(VIII)

et on transforme ensuite le colorant disazoïque obtenu en le complexe de cobalt 1 : 2.

9. Procédé selon la revendication 8, caractérisé par le fait que l'on utilise 1 à 1,2 mole de sulfonaphtylamine et 1 à 0,8 mole de nitroaminophénol, par mole de résorcinol.

10. Colorants préparables selon l'une des revendications 7 à 9.

11. Utilisation des colorants de formule I pour la teinture de la laine ou du polyamide, et en particulier de cuirs ou de peaux.